# DEMANDE DE BREVET EUROPEEN

(11) **EP 4 108 506 A1**
(43) Date de publication de la demande: **28.12.2022**
(21) Numéro de dépôt: 22181121.9
(22) Date de dépôt: 24.06.2022
(51) Int. Cl.: B60L 50/20, B60L 53/16, B60L 53/18, B62H 5/00, B62J 43/13

(54) **ENSEMBLE D ARRIMAGE ET DE RECHARGE D'UN VÉLO ÉLECTRIQUE, KIT D ARRIMAGE ET DE RECHARGE, ANTIVOL DE CADRE, LIEN SOUPLE D ARRIMAGE DE VÉLO**

(30) Priorité: 25.06.2021 FR 2106851
(71) Demandeur: Ecox Enterprises, 94130 Nogent-sur-Marne (FR)
(72) Inventeur: FROGER, Mathieu, 78460 Chevreuse (FR); LEGRAS, Adrien, 78125 Saint Hilarion (FR)
(74) Mandataire: Rataboul, Xavier

(57) **Abrégé**

L'invention concerne un ensemble d'arrimage et de recharge d'un vélo électrique muni d'un premier organe d'ancrage (111), adaptable aux équipements existants, et permettant un arrimage et une connexion électrique en une seule opération.

Selon l'invention, l'ensemble (100) comprend un lien souple (120) muni d'un deuxième organe d'ancrage (121) à une borne de chargement (130) et comprend :
• un premier connecteur (112), porté par le vélo, comprenant des broches de contact électrique (112a) connectées à un câble d'alimentation (113) d'une batterie du vélo ; et
• un deuxième connecteur (122), porté par le lien souple, et comprenant des broches (122a) de contact électrique connectées à un câble de recharge (123) relié à la borne (130) ;
les broches (112a, 122a) des connecteurs étant agencés de manière à être en contact les unes avec les autres lorsque les organes d'ancrage (111, 121) sont en position d'ancrage.

## Description

### Domaine technique

L'invention se rapporte à un ensemble d'arrimage et de recharge d'un vélo électrique, à un kit d'arrimage et de recharge, à un antivol de cadre pour vélo, à une borne de recharge et à un lien souple d'arrimage de vélo.

### Art antérieur

De nombreuses villes proposent des systèmes de location de vélos électriques pouvant être récupérés et déposés dans des stations dédiées pour la recharge et le stockage des vélos en vue d'une nouvelle utilisation.

Généralement, ces stations comprennent une borne d'interface et de gestion avec un utilisateur pour, par exemple, lui permettre de gérer son abonnement ou, plus simplement, déclencher l'emprunt d'un vélo en renseignant ses coordonnées de paiement, notamment. Cette borne d'interface est reliée électriquement à des bornes de recharge et d'ancrage individuelles pour chaque vélo, installées à proximité de la borne d'interface, et qui servent à la fois à l'ancrage sécurisé des vélos pour éviter leur vol, à la recharge des vélos et à la gestion de leur location (possibilité de détecter l'arrivée et le départ d'un vélo et d'envoyer l'information à la borne d'interface et de gestion).

L'inconvénient de ces stations est leur encombrement. En effet, il est nécessaire de prévoir un large espace dédié pour fixer dans le sol à la fois la borne d'interface et les bornes de recharge individuelles et les connecter entre elles. Concrètement, une telle station occupe entre 10 et 20 mètres carrés, voire plus pour les plus grosses stations.

En outre, chaque constructeur dispose de son propre système d'ancrage et de recharge, de sorte qu'un vélo adapté à un système ne l'est pas pour l'autre système.

Enfin, aucun de ces systèmes ne permet à un particulier de fixer et de charger son propre vélo dans une de ces stations.

Or, de plus en plus de particuliers disposent de leur vélo électrique, mais leur utilisation est souvent anxiogène, car l'usager n'est pas certain de l'autonomie de son vélo, car il ne peut généralement le charger qu'à son domicile. En outre, les risques de vols sont très élevés lorsqu'un vélo électrique est stationné dans l'espace public.

Il existe donc un besoin important de proposer un système d'arrimage et de recharge simple, sûr et polyvalent, c'est-à-dire permettant la recharge et l'ancrage de tout type de vélos à un point fixe.

### Résumé de l'invention

Un premier objectif de l'invention est de proposer un système polyvalent et économique, c'est-à-dire permettant différents degrés d'intégration : soit seuls une borne de recharge et un kit d'adaptation à du matériel existant sont spécifiquement conçus, soit l'ensemble du système (c'est-à-dire jusqu'à l'organe d'ancrage sur le vélo) est spécifiquement conçu, pourvu que cet organe d'ancrage puisse être adapté sur n'importe quel vélo.

Un autre objectif est donc de proposer un système d'arrimage et de recharge d'un vélo électrique nécessitant un espace restreint pour son installation.

Un autre objectif de l'invention est de pouvoir transformer réversiblement un vélo électrique standard (c'est-à-dire non conçu spécifiquement pour un service de location) en un vélo de flotte de location automatique, c'est-à-dire que le vélo standard ainsi transformé peut être intégré dans un système de location automatique, sans interaction avec le loueur du vélo, et peut être remis dans son état standard pour pouvoir être revendu d'occasion après une certaine durée d'utilisation en location. Cela permettrait à des loueurs de vélos de proposer un service de location automatique à partir de vélos standards, puis de revendre ces vélos standard après service, sans avoir à utiliser de borne automatique spécifiquement conçue ou de vélo avec système d'arrimage spécifiquement conçu, comme par, exemple les Vélib'^{®}.

L'idée qui sous-tend l'invention est d'utiliser des liens souples d'arrimage entre les vélos et une borne d'interface qui assure également l'arrimage et la recharge, de sorte que l'encombrement de la station est limité, et d'utiliser des systèmes d'ancrage standards adaptés pour incorporer une connexion électrique entre les vélos et la borne. De cette manière, l'utilisation d'une borne selon l'invention sur l'espace public assure le chargement des vélos électrique, et rend le vol plus difficile, car la borne peut offrir des systèmes de surveillance et/ou d'alarme que des points fixes classiques (poteau, barrière, etc.) ne peuvent pas offrir.

On connaît par exemple les antivols de cadre tels que celui décrit dans la demande de brevet EP3566933. Ce type d'antivol comprend un corps en U destiné à être fixé au cadre d'un vélo électrique et une serrure pour une clé de verrouillage/déverrouillage d'une tige de verrouillage mobile entre une position de roulage dans laquelle elle est escamotée dans le corps, et une position de blocage dans laquelle elle passe au travers d'une roue du vélo. Le corps comprend, en outre, un orifice de connexion verrouillable destiné à recevoir une tige d'ancrage complémentaire portée par un organe d'ancrage, tel qu'une chaîne, à un point fixe.

Ce type d'antivol de cadre peut incorporer en remplacement ou en complément de la serrure pour clé, un moyen de commande sans-fil électronique comprenant un émetteur-récepteur sans-fil apte à communiquer avec un téléphone intelligent et une unité centrale programmée pour commander un actionneur apte à libérer/verrouiller la tige de verrouillage à réception d'un signal sans-fil afin de verrouiller ou déverrouiller l'antivol et une alimentation. L'utilisateur peut alors verrouiller ou déverrouiller l'antivol de cadre lorsqu'il est à proximité de l'antivol et sans clé physique. Ces antivols de cadres sont dits « communicants », car ils peuvent être verrouillés/déverrouillés à distance, par l'intermédiaire d'un smartphone muni d'une application ad hoc. Ces antivols de cadre communicants comportent également avantageusement un GPS.

Un objectif de la présente invention est de proposer un système d'arrimage et de recharge de vélo électrique pouvant s'adapter sur un vélo électrique muni d'un antivol de ce type, pour permettre d'assurer sur l'espace public non seulement l'arrimage sécurisé de vélos n'appartenant pas nécessairement à une flotte, mais également leur recharge.

Ainsi, l'invention propose un système d'ancrage et de chargement de vélos électriques qui peut soit être développé intégralement, mais pouvant équiper tout type de vélo, soit être adapté sur tout type de vélo au moyen d'un kit d'adaptation.

Plus précisément, l'invention a pour objet un ensemble d'arrimage et de recharge d'un vélo électrique, l'ensemble d'arrimage et de recharge comprenant un premier organe d'ancrage verrouillable réversiblement, porté par un antivol de cadre de vélo, le premier organe d'ancrage étant destiné à coopérer, en position d'ancrage, avec un deuxième organe d'ancrage complémentaire porté par une première extrémité libre d'un lien souple pour antivol de cadre et d'arrimage du vélo à une borne de chargement munie d'au moins un point fixe d'arrimage, l'ensemble d'arrimage et de recharge selon l'invention comprenant :
- un premier connecteur, porté par l'antivol de cadre de vélo, comprenant au moins deux broches de contact électrique connectées à un câble d'alimentation relié électriquement à une batterie du vélo électrique ; et
- un deuxième connecteur, porté par la première extrémité libre du lien souple d'arrimage, et comprenant au moins deux broches de contact électrique connectées à un câble de recharge relié électriquement à une borne de recharge électrique fixe ;
les broches de contact électrique des premier et deuxième connecteurs étant agencés de manière à être en contact électrique les unes avec les autres lorsque les premier et deuxième organes d'ancrage sont en position d'ancrage.

Comme il sera décrit par la suite, les organes d'ancrage verrouillable réversiblement et les connecteurs peuvent être séparés ou intégrés les uns aux autres selon les modes de réalisation.

Selon des formes de réalisation particulières :
- le lien souple d'arrimage peut comprendre une seconde extrémité fixée de manière non réversible à la borne de recharge, et le câble de recharge être relié directement à la borne de recharge électrique fixe ;
- le lien souple d'arrimage peut comprendre une seconde extrémité libre munie d'un troisième organe d'ancrage, et la borne de recharge peut comprendre un quatrième organe d'ancrage apte à coopérer avec le troisième organe d'ancrage pour fixer le lien souple d'arrimage à la borne de recharge de manière réversible, et un premier moyen de liaison électrique avec un second moyen de liaison électrique porté par le câble de recharge pour permettre une connexion électrique du câble de recharge à la borne de recharge lorsque le lien souple d'arrimage est fixé de manière réversible au quatrième organe d'ancrage de la borne ;
- le quatrième organe d'ancrage de la borne de recharge peut comprendre un premier anneau d'arrimage, et le troisième organe d'ancrage de la seconde extrémité libre du lien souple d'arrimage comprend un second anneau d'arrimage ;
- le troisième organe d'ancrage de la seconde extrémité libre du lien souple d'arrimage peut comprendre une tige d'ancrage, et le quatrième organe d'ancrage de la borne de recharge peut comprendre un orifice d'ancrage et un mécanisme verrouillable réversiblement de blocage de la tige d'ancrage dans l'orifice d'ancrage ;
- le quatrième organe d'ancrage de la borne de recharge peut comprendre une tige d'ancrage, et le troisième organe d'ancrage de la seconde extrémité libre du lien souple d'arrimage comprend un orifice d'ancrage et un mécanisme verrouillable réversiblement de blocage de la tige d'ancrage dans l'orifice d'ancrage ;
- le premier organe d'ancrage peut comprendre un orifice d'ancrage et le deuxième organe d'ancrage complémentaire peut comprendre une tige d'ancrage, le premier organe d'ancrage comprenant, en outre, un mécanisme verrouillable réversiblement de blocage de la tige d'ancrage dans l'orifice d'ancrage ;
- le premier organe d'ancrage peut comprendre une tige d'ancrage et le deuxième organe d'ancrage complémentaire peut comprendre un orifice d'ancrage et un mécanisme verrouillable réversiblement de blocage de la tige d'ancrage dans l'orifice d'ancrage ;
- le deuxième organe d'ancrage porté par la première extrémité libre du lien souple d'arrimage peut comprendre une première tige d'ancrage, le deuxième connecteur comprenant :
   - un orifice d'ancrage conformé pour loger et bloquer de manière non réversible la première tige d'ancrage de la première extrémité du lien souple ;
   - une seconde tige d'ancrage destinée à coopérer avec le premier organe d'ancrage porté par le vélo ; et
   - des broches de contact électrique reliées au câble de recharge, les broches de contact du deuxième connecteur étant agencée de manière à être en contact électrique avec les broches de contact électrique du premier connecteur lorsque les deux organes d'ancrage coopèrent en position d'ancrage ;
- le premier organe d'ancrage porté par l'antivol de cadre de vélo peut comprendre un orifice d'ancrage, le premier connecteur comprenant :
   - une portion annulaire munie d'une lumière centrale, rapportée et fixée de manière non réversible contre l'orifice d'ancrage du premier organe d'ancrage de manière à laisser un accès libre à l'orifice d'ancrage au travers de la lumière centrale ; et
   - des broches de contact électrique connectées à un câble d'alimentation destiné à être branché sur une batterie du vélo électrique, les broches de contact électrique étant agencées de manière à être en contact électrique avec les broches de contact électrique du deuxième connecteur lorsque les deux organes d'ancrage coopèrent en position d'ancrage ;
- le premier organe d'ancrage porté par l'antivol de cadre de vélo peut comprendre un orifice d'ancrage, le premier connecteur étant intégré au premier organe d'ancrage et comprenant des broches de contact électrique connectées à un câble d'alimentation destiné à être branché sur une batterie du vélo électrique, les broches de contact électrique étant agencées radialement autour de l'orifice d'ancrage du premier organe d'ancrage ;
- le premier organe d'ancrage peut être porté, respectivement, par un antivol de cadre fixé au cadre du vélo, un boîtier fixé au cadre du vélo, directement par une portion de cadre du vélo, ou par un logement du vélo destiné à recevoir la batterie en position d'utilisation ;
- le lien souple d'arrimage peut comprendre entre ses deux extrémités, un manchon extérieur de protection recouvrant le câble de recharge ;
- le lien souple d'arrimage peut comprendre, en outre, entre ses deux extrémités, un câble électrique d'alarme, la borne de recharge étant conçue pour émettre une alarme si le lien souple d'arrimage est coupé ;
- l'alarme peut être une alarme sonore, une alarme visuelle, et/ou un message d'alarme transmis par un réseau de télécommunication.

L'invention a également pour objet un kit d'arrimage et de recharge destiné à équiper un vélo électrique ayant un premier orifice d'ancrage, le kit comprenant :
- un premier connecteur destiné à être fixé contre le premier orifice d'ancrage et comprenant :
   - une portion annulaire et munie d'une lumière centrale, destinée à être rapportée et fixée de manière non réversible contre le premier orifice d'ancrage du vélo de manière à laisser un accès libre au premier orifice d'ancrage au travers de la lumière centrale ; et
   - des broches de contact électrique connectées à un câble d'alimentation destiné à être branché sur une batterie du vélo électrique,
- un deuxième connecteur destiné à être fixé de manière non réversible à une première extrémité libre d'un lien souple d'arrimage du vélo à une borne fixe de recharge, ladite première extrémité libre du lien souple comprenant une première tige d'ancrage, le second connecteur comprenant :
   - un deuxième orifice d'ancrage conformé pour loger et bloquer de manière non réversible la première tige d'ancrage de la première extrémité du lien souple ;
   - une seconde tige d'ancrage destinée à coopérer avec le premier orifice d'ancrage du vélo au travers de la lumière centrale du premier connecteur ; et
   - des broches de contact électrique reliées à un câble de recharge destiné à être connecté électriquement à la borne fixe de recharge, les broches de contact électrique du deuxième connecteur étant agencées de manière à être en contact électrique avec les broches de contact électrique du premier connecteur lorsque la seconde tige d'ancrage est fixée dans le premier orifice d'ancrage en position d'ancrage.

L'invention a également pour objet un kit d'arrimage et de recharge pour un vélo électrique muni d'un antivol de cadre ayant un premier orifice d'ancrage, le kit comprenant :
- un premier connecteur destiné à être fixé contre l'orifice d'ancrage et comprenant :
   - une portion annulaire d'épaisseur déterminée et munie d'une lumière centrale, destinée à être fixée de manière non réversible contre le premier orifice d'ancrage de l'antivol de cadre de manière à laisser un accès libre au premier orifice d'ancrage au travers de la lumière centrale ; et
   - des broches de contact électrique connectées à un câble d'alimentation destiné à être branché sur une batterie du vélo électrique, les broches étant agencées radialement autour de la lumière centrale de la portion annulaire
- un deuxième connecteur destiné à être fixé de manière non réversible à une première extrémité libre d'un lien souple d'arrimage du vélo à une borne fixe de recharge et d'arrimage, ladite première extrémité libre du lien souple comprenant une première tige d'ancrage, le second connecteur comprenant :
   - un deuxième orifice d'ancrage conformé pour loger et bloquer de manière non réversible la première tige d'ancrage de la première extrémité du lien souple ;
   - une seconde tige d'ancrage destinée à coopérer avec le premier orifice d'ancrage de l'antivol de cadre au travers de la lumière centrale du premier connecteur ; et
   - des broches de contact électrique reliées à un câble de recharge destiné à être connecté électriquement à la borne fixe de recharge, les broches de contact du deuxième connecteur étant agencées de manière à être en contact électrique avec les broches de contact du premier connecteur lorsque la seconde tige d'ancrage est fixée dans le premier orifice d'ancrage de l'antivol en position d'ancrage.

L'invention a également pour objet un antivol de cadre comprenant un corps en U destiné à être fixé au cadre d'un vélo électrique et comprenant une serrure pour une clé et/ou un moyen de commande sans-fil électronique, et une tige de verrouillage mobile entre une position de roulage dans laquelle elle est escamotée dans le corps, et une position de blocage dans laquelle elle passe au travers d'une roue du vélo, le corps comprenant, en outre, un orifice d'arrimage verrouillable destiné à recevoir une tige d'ancrage complémentaire porté par un lien souple d'arrimage à un point fixe, l'orifice de connexion comprenant des broches de contact électrique reliées à un câble de recharge destiné à être branché sur une batterie du vélo électrique.

Selon une forme de réalisation particulière, les broches de contact électrique peuvent être reliées à un mécanisme de blocage/déblocage de la clé dans la serrure, de sorte que, en utilisation, la clé ne peut être retirée de la serrure que lorsqu'une tige d'ancrage portée par un lien souple d'arrimage du vélo est correctement insérée dans l'orifice d'arrimage et que les broches de contact électrique sont en contact électrique avec les broches de contact électrique portées par le deuxième connecteur du lien souple d'arrimage.

L'invention a également pour objet une borne de recharge et d'arrimage de vélos électriques comprenant au moins un lien souple d'arrimage fixé de manière non amovible à la borne de recharge par une première extrémité et comprenant une seconde extrémité libre munie d'un organe d'ancrage et d'un connecteur équipé de broches de contact électrique, ces broches étant reliées électriquement à la borne fixe par un câble de recharge intégré au lien souple d'arrimage.

L'invention a également pour objet un lien souple d'arrimage pour un vélo électrique, comprenant :
- un câble de recharge électrique ;
- une première extrémité libre munie :
   - d'un deuxième organe d'ancrage destiné à se fixer réversiblement à un premier organe d'ancrage d'un antivol de cadre de vélo ; et
   - d'un deuxième connecteur destiné à être en contact électrique avec un premier connecteur porté par l'antivol de cadre de vélo, le deuxième connecteur comprenant au moins deux broches de contact électrique connectées à une première extrémité du câble de recharge électrique
- une seconde extrémité libre munie :
   - d'un troisième organe d'ancrage destiné à se fixer réversiblement à un quatrième organe d'ancrage porté par une borne de recharge ;
   - d'un second moyen de liaison électrique, connecté au câble de recharge, avec un premier moyen de liaison électrique porté par la borne de recharge pour permettre une connexion électrique du câble de recharge à la borne de recharge lorsque le lien souple d'arrimage est fixé de manière réversible au quatrième organe d'ancrage porté par la borne de recharge.

### Brève description des figures

D'autres caractéristiques de l'invention seront énoncées dans la description détaillée ci-après faite en référence aux figures annexées, données à titre d'exemple, et qui représentent, respectivement :

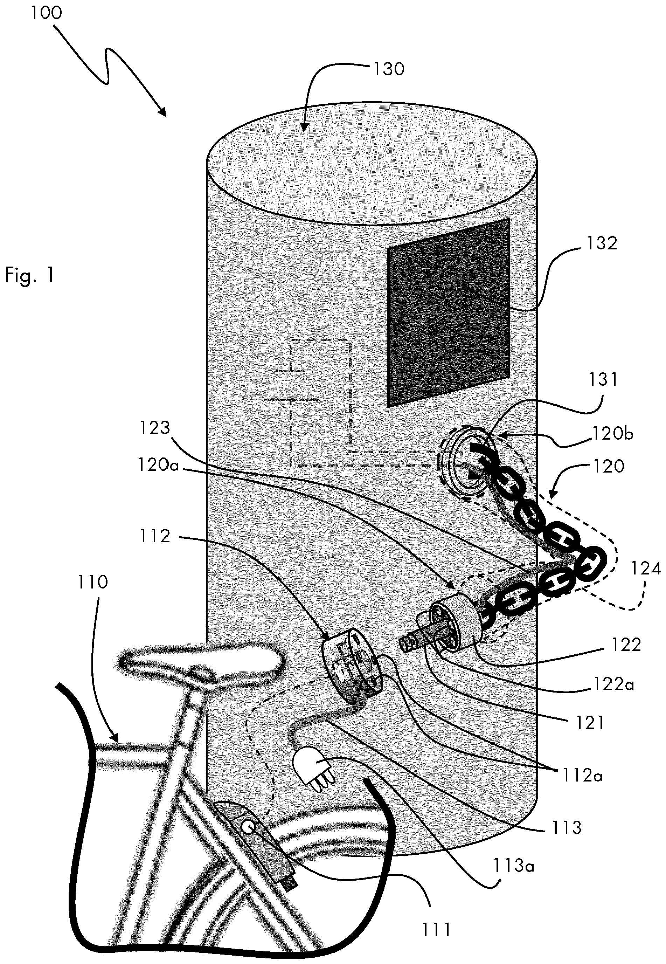

[Fig. 1], une vue schématique en perspective d'un premier mode de réalisation d'un ensemble d'arrimage et de recharge selon l'invention, dans lequel une extrémité du lien souple d'arrimage est fixée de manière non réversible à la borne de recharge, l'autre extrémité étant muni d'un premier mode de réalisation de deuxième connecteur pour antivol de cadre selon l'invention ;

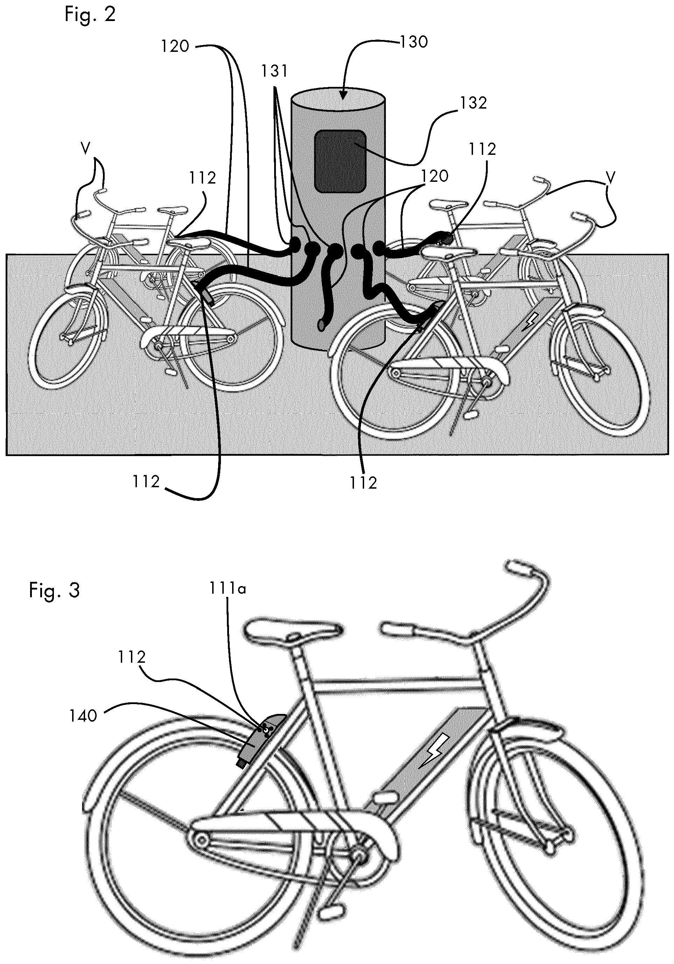

[Fig. 2], une vue schématique en perspective d'un ensemble d'arrimage et de recharge selon l'invention comprenant une borne selon la figure 1 en position d'utilisation avec plusieurs vélos ;
[Fig. 3], une vue schématique en perspective d'un vélo électrique dont le premier point d'ancrage est porté par un antivol de cadre ;

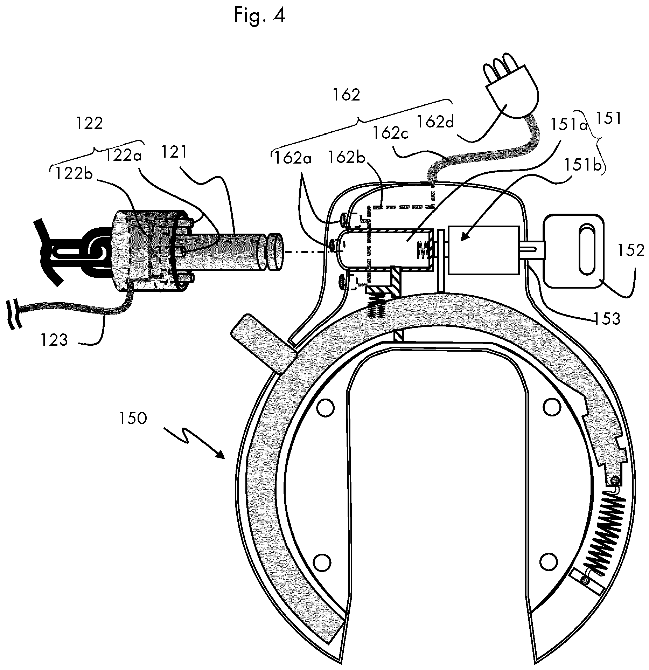

[Fig. 4], une vue schématique en coupe et perspective d'un premier mode de réalisation des premier et deuxième organes d'ancrage d'un ensemble d'arrimage et de recharge selon l'invention, portés respectivement par un antivol de cadre de vélo et par un lien souple d'ancrage du vélo ;

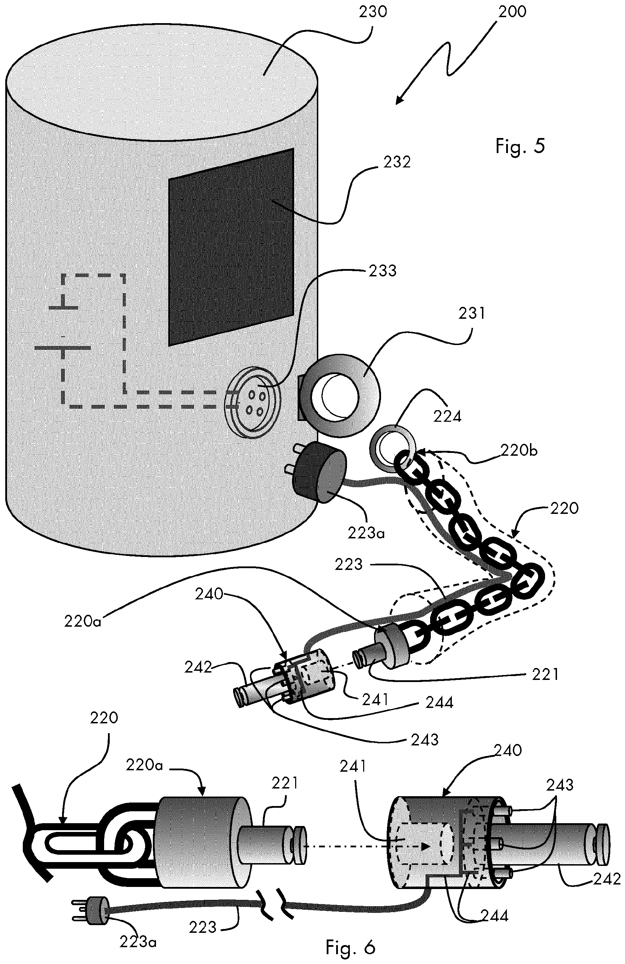

[Fig. 5], une vue schématique en perspective d'un deuxième mode de réalisation d'une borne de chargement d'un ensemble d'arrimage et de recharge selon l'invention, dans lequel une extrémité du lien souple d'arrimage peut être fixée de manière réversible à la borne de recharge ;
[Fig. 6], une vue schématique en perspective d'un deuxième mode de réalisation d'un deuxième organe d'ancrage porté par un lien souple d'ancrage selon l'invention ;

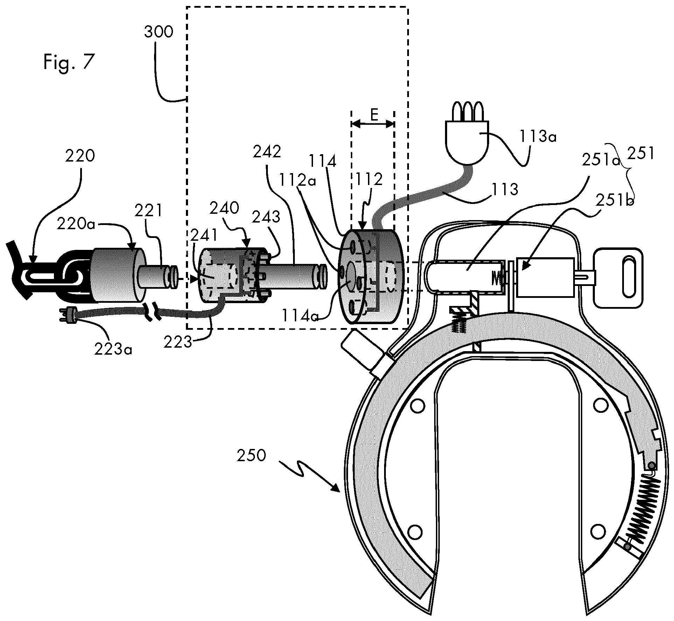

[Fig. 7], une vue schématique en coupe et perspective du deuxième mode de réalisation de deuxième organe d'ancrage de la figure 6 en cours de fixation sur un deuxième mode de réalisation de premier organe d'ancrage selon l'invention ;

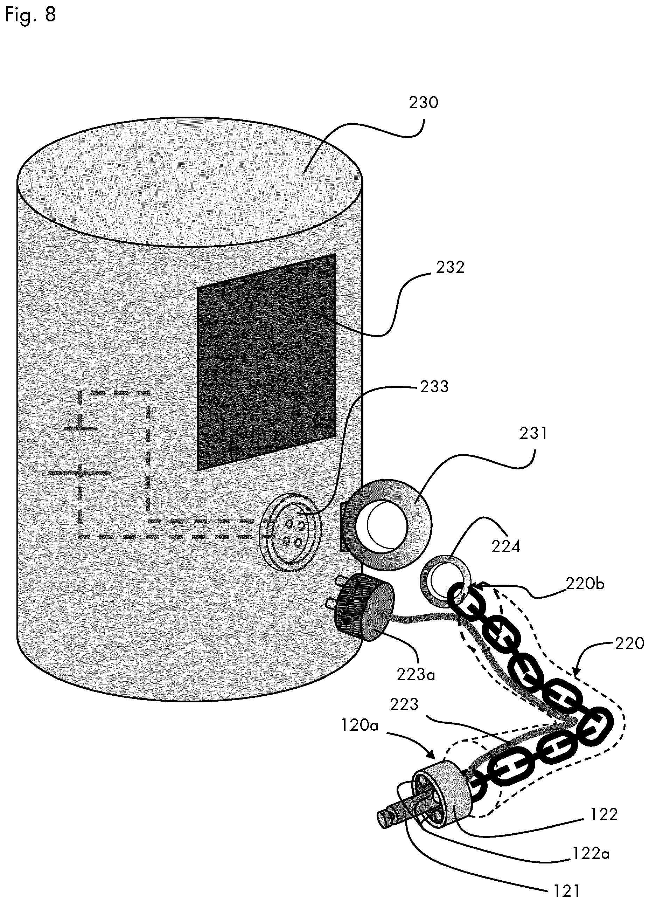

[Fig. 8], une vue schématique en perspective du deuxième mode de réalisation d'une borne de chargement de la figure 5, dans lequel une extrémité du lien souple d'arrimage peut être fixée de manière réversible à la borne de recharge, l'autre extrémité étant munie du premier mode de réalisation de deuxième organe d'ancrage de la figure 1 ;

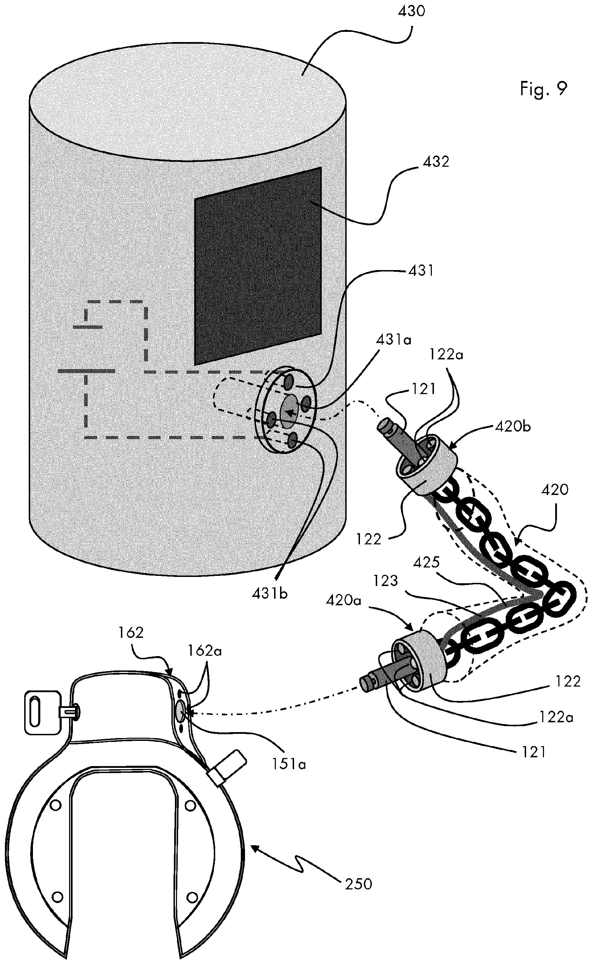

[Fig. 9], une vue schématique en perspective d'un troisième mode de réalisation d'une borne de chargement d'un ensemble d'arrimage et de recharge selon l'invention, dans lequel une extrémité du lien souple d'arrimage peut être fixée de manière réversible à la borne de recharge, l'autre extrémité étant muni du premier mode de réalisation de deuxième organe d'ancrage de la figure 1 et étant destinée à être fixée sur le premier mode de réalisation de premier organe d'ancrage de la figure 4 ;

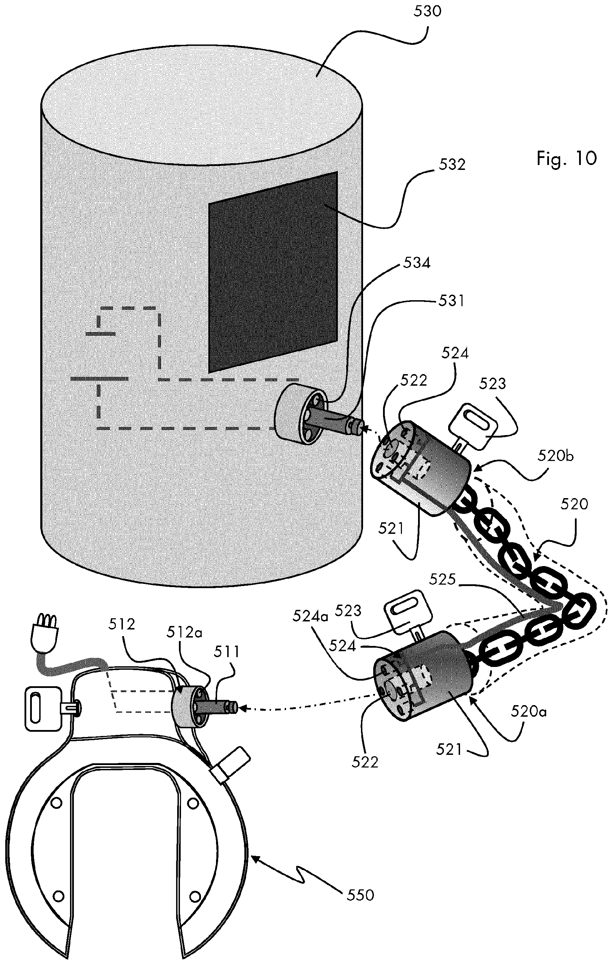

[Fig. 10], une vue schématique en perspective d'un quatrième mode de réalisation d'une borne de chargement d'un ensemble d'arrimage et de recharge selon l'invention, dans lequel une extrémité du lien souple d'arrimage peut être fixée de manière réversible à la borne de recharge, l'autre extrémité étant muni d'une troisième mode de réalisation de deuxième organe d'ancrage et étant destinée à être fixée sur un troisième mode de réalisation de premier organe d'ancrage selon l'invention ;

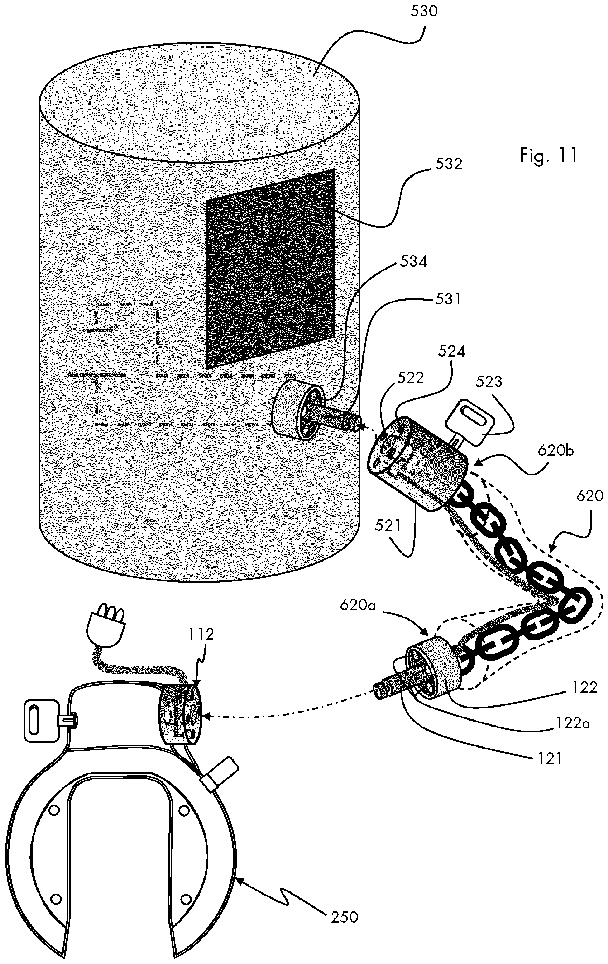

[Fig. 11], une vue schématique en perspective du quatrième mode de réalisation d'une borne de chargement de la figure 10, dans lequel une extrémité du lien souple d'arrimage peut être fixée de manière réversible à la borne de recharge, l'autre extrémité étant muni du premier mode de réalisation de deuxième organe d'ancrage de la figure 1 et étant destinée à être fixée sur le deuxième mode de réalisation de premier organe d'ancrage de la figure 7 ;

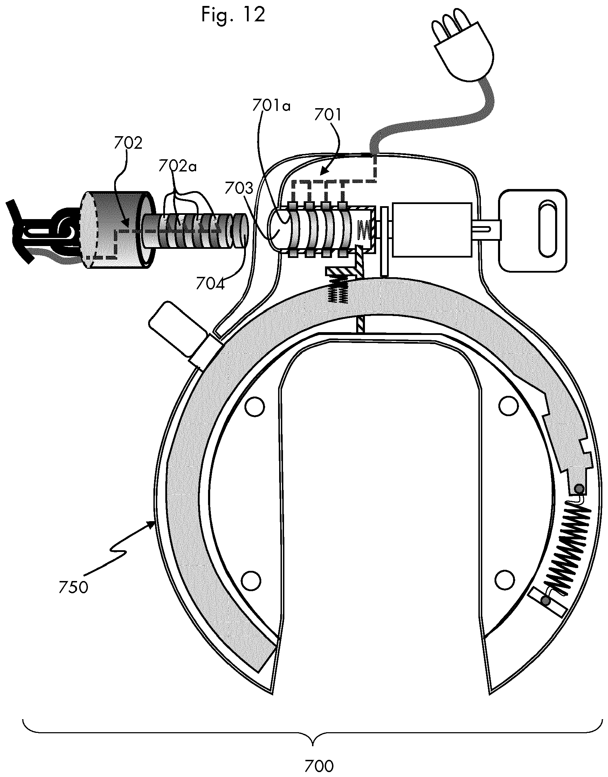

[Fig. 12], une vue schématique en coupe d'un quatrième mode de réalisation des premier et deuxième organes d'ancrage d'un ensemble d'arrimage et de recharge selon l'invention, dans lequel les broches électriques sont agencées de manière annulaire autour et le long de l'orifice d'ancrage et autour et le long de la tige d'ancrage ;

### Description de modes de réalisation

L'ensemble d'arrimage et de recharge d'un vélo électrique selon l'invention comprend trois éléments principaux :
- la borne de recharge et d'arrimage qui a elle seule permet la recharge et l'arrimage de plusieurs vélos sans infrastructure supplémentaire que la borne elle-même ;
- le lien souple de recharge et d'arrimage qui relie chaque antivol de cadre de vélo à la borne pour permettre la recharge et l'arrimage des vélos dans une position relativement libre autour de la borne, sans infrastructure supplémentaire ; et
- l'organe d'ancrage porté par l'antivol de cadre de vélo et adaptable à tout type de vélo électrique, et qui permet la recharge et l'arrimage du vélo lorsque ce dernier est relié à la borne par le lien souple d'arrimage.

On entend par lien souple un organe de fixation qui n'a pas de forme d'ensemble propre, comme par exemple un câble ou une chaîne, avantageusement protégé(e) par une gaine, par opposition à un lien rigide comme par exemple une barre métallique ou les bornes individuelles fixées dans le sol. Souple ne signifie bien entendu pas que le lien n'est pas résistant à la découpe. Un lien souple d'arrimage dans le contexte de l'invention doit permettre de s'opposer au vol du vélo, tout en permettant un déplacement et un réagencement du vélo rattaché à la borne par ledit lien souple d'arrimage.

Ainsi, la figure 1 illustre un premier mode de réalisation d'un ensemble 100 d'arrimage et de recharge selon l'invention.

Le vélo électrique 110 comprend un premier organe d'ancrage 111 (ici un orifice d'ancrage d'un antivol de cadre) verrouillable réversiblement et destiné à coopérer, en position d'ancrage, avec un deuxième organe d'ancrage 121 complémentaire (ici une tige d'ancrage) porté par une première extrémité libre 120a d'un lien souple d'arrimage 120 du vélo à une borne fixe de chargement 130 munie d'au moins un point fixe d'arrimage131 et d'une interface pour la gestion de l'arrimage et de la charge (enregistrement, paiement, etc.). Dans le mode de réalisation illustré, le premier organe d'ancrage 111 est un orifice d'ancrage, et le deuxième organe d'ancrage 121 complémentaire est une tige d'ancrage. L'inverse est également possible, dans lequel le premier organe d'ancrage 111 est une tige d'ancrage, et le deuxième organe d'ancrage 121 complémentaire est un orifice d'ancrage (voir figure 10).

Selon l'invention, l'antivol de cadre de vélo porte un premier connecteur 112 comprenant au moins deux broches de contact électrique 112a connectées à un câble d'alimentation 113 relié électriquement à une batterie du vélo électrique. La vue illustrée est éclatée et montre le premier connecteur 112 à distance de l'antivol de cadre du vélo 110, mais en utilisation, le premier connecteur selon l'invention est fermement fixé à l'antivol de cadre du vélo.

Sur la figure 1, le câble d'alimentation 113 comprend une prise 113a de connexion à la batterie. Cependant, l'invention prévoit également, dans un mode de réalisation plus intégré, que le câble d'alimentation est directement connecté à la batterie et, par exemple, intégré dans le cadre.

L'ensemble d'arrimage et de recharge selon l'invention comprend également un second connecteur 122, porté par la première extrémité libre 120a du lien souple d'arrimage 120, et qui comprend au moins deux broches 122a de contact électrique connectées à un câble 123 de recharge, relié électriquement à la borne de recharge électrique fixe 130. Les broches de contact électrique 112a-122a des premier et second connecteurs sont agencées de manière à être en contact électrique les unes avec les autres lorsque les premier et deuxième organes d'ancrage sont en position d'ancrage, c'est-à-dire lorsque le lien souple d'ancrage est fixé au vélo.

Le lien souple d'arrimage comprend avantageusement entre ses deux extrémités 120a-120b, un manchon extérieur de protection 124 symbolisé par des traits en pointillé pour ne pas cacher les autres structures.

Ce manchon permet non seulement de retarder la coupure du lien en cas de tentative de vol, mais également, dans le cadre de la présente invention, de maintenir et de protéger le câble de recharge 123 en le recouvrant.

Dans le mode de réalisation illustré en figure 1, la seconde extrémité 120b du lien souple d'arrimage 120 est fixée de manière non réversible à la borne de recharge par le point fixe d'arrimage 131, et le câble de recharge 130 est relié directement à la borne de recharge électrique fixe. Un seul lien souple d'arrimage 120 est illustré, mais la borne selon l'invention en comprend avantageusement plusieurs fixés à des points fixes d'arrimages 131, comme illustré en figure 2.

Sur cette figure, cinq liens souples d'arrimage 120 sont fixés sur la borne 130. Ils sont alignés, mais il est aussi possible de prévoir qu'ils soient fixés à des hauteurs différentes pour faciliter le parking des vélos. Quatre des cinq liens souples d'arrimage 120 sont fixés par leur première extrémité 120a aux antivols de cadre des vélos électriques V pourvus d'un premier connecteur 112 selon l'invention. Le cinquième lien souple 120 au milieu des autres est disponible pour arrimer et charger un autre vélo. Avantageusement les liens 120 d'une même borne 130 présentent des longueurs différentes pour faciliter le parking des vélos. Alternativement, la borne 130 peut comprendre un système d'enrouleur permettant de moduler la longueur du lien en fonction de l'espace disponible à proximité de la borne pour garer le vélo V.

On comprend donc que l'invention permet d'arrimer et de charger plusieurs vélos tout en limitant l'encombrement de l'installation qui se limite à la borne. Bien entendu, il est préférable que l'espace public autour de la borne soit réservé, mais cela n'implique aucun travail de gros œuvre, contrairement aux stations classiques nécessitant l'installation de bornes fixes : creusement de tranchées pour enfouissement des alimentations électriques, et coulage d'une dalle de béton pour pouvoir sceller les bornes d'arrimage et de recharge individuelles.

Comme le montre la figure 3, dans un mode peu intégré de mise en œuvre de l'invention dans lequel des vélos sont modifiés ou adaptés avec le système d'arrimage et de recharge selon l'invention, le premier point d'ancrage 111a est porté par un antivol de cadre 140 tel que celui décrit dans le document EP3566933, de préférence du type communicant. Cela permet à n'importe quel vélo équipé d'un tel antivol de cadre 140 de pouvoir facilement être adapté au système selon l'invention en lui ajoutant un premier connecteur selon l'invention, soit en le rapportant par collage, soudure ou autre moyen de fixation définitive (figures 1, 7, 10 et 11), soit en l'y intégrant dès la fabrication (figures 4, 9 et 12).

Ce mode de réalisation est particulièrement avantageux pour pouvoir constituer une flotte de vélos de location automatique (c'est-à-dire sans interaction avec un loueur, mais uniquement au travers d'une interface numérique (application mobile ou borne dédiée) à partir de vélos électriques du commerce, ou vélos dits « grand public », par opposition aux vélos spécifiquement conçus et personnalisés par les loueurs automatiques du type Vélib'^{®}.

Ainsi, dans un exemple de réalisation non limitatif, on peut prévoir une borne de recharge du type armoire sécurisée comprenant des logements verrouillables pour les chargeurs fournis avec chaque vélo électrique du commerce.

Chaque logement verrouillable comprend à l'intérieur une prise de branchement de la prise secteur du chargeur et une prise de connexion de la prise « batterie » du chargeur. Cette prise de connexion est connectée de manière réversible, à l'extérieur du logement, avec un câble de chargement intégré dans la gaine d'un lien souple d'arrimage. On pourra se reporter aux figures 1, 5, 8, 9, 10 et 11 pour des exemples de réalisation. Alternativement, le logement peut comprendre un passage pour la prise « batterie » et le fil du chargeur, qui serviront de câble de recharge électrique.

La première extrémité libre du lien souple est équipée d'un deuxième organe d'ancrage à un antivol de cadre et d'un deuxième connecteur rapporté (voir figures 5, 6 et 7), ou directement intégré (dans un mode de réalisation où le lien souple pour antivol de cadre est spécifiquement conçu conformément au système : voir figures 1, 4, 8, 9, 10 et 11). Ce deuxième connecteur est connecté au câble de recharge spécifique ou, alternativement, à la prise batterie du câble du chargeur d'origine dont le câble s'étend depuis le logement verrouillable.

De préférence, chaque vélo est également équipé d'un antivol de cadre communicant connu auquel est rapporté un premier connecteur (voir figures 1, 7, 10 et 11), ou qui est spécialement conçu pour comprendre un tel premier connecteur (voir figures 3, 4, 9 et 12).

Chaque vélo est arrimé à l'armoire par l'intermédiaire du lien souple connecté à l'antivol de cadre pour être chargé. Lorsqu'un utilisateur souhaite louer un vélo, il se connecte à son application mobile et commande le déverrouillage de l'antivol de cadre. La date, l'heure et les coordonnées de l'utilisateur sont alors enregistrées et l'utilisateur peut partir avec le vélo. Si le lien souple d'arrimage est fixé de manière réversible à la borne, l'utilisateur peut aussi le récupérer pour l'utiliser avec l'antivol de cadre et arrimer son vélo à un point fixe lorsqu'il en aura besoin.

Au retour, l'utilisateur connecte le lien souple d'arrimage (après l'avoir arrimé à la borne le cas échéant) à l'antivol de cadre du vélo, et la date et l'heure de reconnexion sont mémorisées pour facturation.

Dans un mode de réalisation alternatif ou complémentaire, l'antivol de cadre peut ne pas être communicant et comprendre une serrure pour une clé physique. Dans ce cas, l'armoire sécurisée peut comprendre des boîtiers de clés sécurisés verrouillables/déverrouillables à distance à l'aide d'une application mobile adaptée.

Une fois que le loueur souhaite renouveler sa flotte, il retire ou change l'antivol de cadre du vélo et il peut revendre le vélo électrique avec son chargeur d'origine sans aucune difficulté de reconditionnement.

La figure 4 illustre un premier mode de réalisation des premier et deuxième organes d'ancrage d'un ensemble d'arrimage et de recharge selon l'invention, portés respectivement par un antivol de cadre de vélo et par un lien souple d'ancrage du vélo.

Dans ce mode de réalisation, le premier organe d'ancrage 151 est porté par un antivol de cadre 150 similaire à celui qui est décrit dans le document EP3566933 (dont la description est incorporée ici par référence), mais qui a été adapté pour incorporer, dès la conception et la fabrication, un premier connecteur 162 selon l'invention à proximité du premier organe d'ancrage 151.

Ainsi, ce dernier comprend au moins deux broches de contact électrique connectées par des fils électriques ou des pistes métalliques 162b, par exemple au moyen d'un circuit imprimé, à un câble d'alimentation 162c destiné à être relié électriquement à la batterie du vélo électrique. Sur la figure, une prise 162d est illustrée pour symboliser la possibilité de brancher le câble d'alimentation sur la batterie. Néanmoins, dans un mode de mise en œuvre plus intégrée du système selon l'invention, il est possible de prévoir des cosses de connexion qui seront branchées définitivement à la batterie par le technicien lors de l'installation de l'antivol. De même, le câble d'alimentation peut simplement être fixé le long du cadre par l'utilisateur, ou intégré dans le cadre au moment de l'installation par le technicien si cela est possible.

Dans ce mode de réalisation, le premier organe d'ancrage 151 comprend un orifice d'ancrage 151a autour duquel sont agencées les broches 162a, et un mécanisme 151b verrouillable réversiblement de blocage du deuxième organe d'ancrage 121 porté par la première extrémité 120a du lien souple 120 (voir figure 1).

Dans ce mode de réalisation également, le deuxième organe d'ancrage comprend une tige d'ancrage 121 destinée à être insérée et bloquée réversiblement dans l'orifice d'ancrage 151a. Un deuxième connecteur 122 est directement intégré, dès la conception et la fabrication, dans la première extrémité 120a du lien souple 120. Le deuxième connecteur 122 comprend au moins deux broches 122a de contact électrique connectées à un câble de recharge 123 relié, ou destiné à être relié électriquement à la borne de recharge électrique fixe 130.

Les broches 162a du premier connecteur, et les broches 122a du deuxième connecteur sont étant agencées de manière à être en contact électrique les unes avec les autres lorsque les organes d'ancrage 151 et 121 coopèrent, c'est-à-dire quand ils sont en position d'ancrage et que la tige d'ancrage 121 est insérée à fond et bloquée dans l'orifice d'ancrage 151a.

Cela permet à n'importe quel vélo d'être adapté au système selon l'invention en lui ajoutant un tel antivol de cadre 150. Le premier connecteur étant intégré à l'antivol, cette adaptation peut être réalisée facilement par le propriétaire du vélo en montant simplement cet antivol 150 sur son vélo.

Dans un mode de réalisation particulier, les broches de contact électrique 162a peuvent être reliées à un mécanisme (non illustré) de blocage/déblocage de la clé 152 dans la serrure 153, de sorte que, en utilisation, la clé ne peut être retirée de la serrure que lorsqu'une tige d'ancrage 121 portée par un lien souple d'arrimage du vélo est correctement inséré dans l'orifice d'arrimage 151a et que les broches de contact électrique 162a sont en contact électrique avec les broches de contact électrique 122a portées par le deuxième connecteur du lien souple d'arrimage.

La figure 5 illustre un autre mode de réalisation 200 de l'ensemble selon l'invention, et comprenant : un deuxième mode de réalisation de la première extrémité 220b du lien souple (illustrée en agrandissement en figure 6), un deuxième mode de réalisation de la seconde extrémité 220b du lien souple, et un deuxième mode de réalisation de la borne 230 adapté à cette seconde extrémité 220b du lien souple.

À titre de remarque, le mode de réalisation de la première extrémité (organe d'ancrage et deuxième connecteur) du lien souple est indépendant du mode de réalisation de la seconde extrémité du lien souple, de sorte que les différentes solutions exposées dans la présente demande peuvent être interverties.

Comme précédemment, la borne de chargement 230 comprend au moins un point fixe d'arrimage (de préférence plusieurs), et une interface 232 pour la gestion de l'arrimage et de la charge (enregistrement, paiement, etc.) des vélos.

À la différence du mode de réalisation de la figure 1, le lien souple d'arrimage 220 de la figure 5 comprend une seconde extrémité 220b libre (c'est-à-dire non fixée définitivement à la borne comme dans le mode de réalisation de la figure 1) et munie d'au moins un troisième organe d'ancrage 224. L'exemple illustré est une chaîne de vélos standard vendue avec les antivols de cadre.

De manière complémentaire, la borne de recharge 230 comprend un quatrième organe d'ancrage 231, comme point fixe d'arrimage, apte à coopérer avec le troisième organe d'ancrage 224 pour fixer de manière réversible le lien souple d'arrimage 220 à la borne de recharge 230. En outre, la borne 230 comprend un premier moyen de liaison électrique 233 avec un second moyen de liaison électrique 223a porté par le câble de recharge 223 pour permettre une connexion électrique du câble de recharge 223 à la borne de recharge 230 lorsque le lien souple d'arrimage 220 est fixé de manière réversible au quatrième organe d'ancrage de la borne.

Dans ce mode de réalisation, le quatrième organe d'ancrage de la borne de recharge 230 comprend un premier anneau d'arrimage 231, et le troisième organe d'ancrage 224 de la seconde extrémité libre 220b du lien souple d'arrimage 220 comprend un second anneau d'arrimage. Les anneaux d'arrimage de la borne et du lien souple doivent être suffisamment grands pour permettre le passage de la première extrémité libre 220a du lien souple d'arrimage 220 dans les deux anneaux et ainsi permettre le bouclage du lien souple 220 sur le premier anneau d'arrimage 231 de la borne.

L'anneau d'arrimage 231 de la borne pourrait être remplacé par une barre périphérique, par exemple. Ce point fixe d'arrimage est adapté aux chaînes de vélos standard vendues avec les antivols de cadre, et qui comprennent un anneau à leur seconde extrémité.

La figure 5 illustre également un deuxième mode de réalisation d'un deuxième organe d'ancrage, identique aux chaînes de vélos standard vendues avec les antivols de cadre, et d'un deuxième connecteur selon l'invention permettant d'adapter une chaîne standard au système d'ancrage et de recharge selon l'invention.

Dans ce mode de réalisation, le deuxième organe d'ancrage de la première extrémité libre 220a du lien souple d'arrimage 220 comprend une tige d'ancrage 221. Selon l'invention, un deuxième connecteur 240 est adapté à cette tige d'ancrage 221 et comprend :
- un orifice d'ancrage 241 conformé pour loger et bloquer de manière non réversible la première tige d'ancrage 221 de la première extrémité 220a du lien souple 220 ;
- une seconde tige d'ancrage 242 destinée à coopérer avec le premier organe d'ancrage 111-151 porté par le vélo ; et
- des broches de contact électrique 243 reliées au câble de recharge 223 par des connexions 244 (fils ou pistes métalliques).

Les broches de contact 243 du deuxième connecteur 240 sont agencées de manière à être en contact électrique avec les broches de contact du premier connecteur lorsque les deux organes d'ancrage coopèrent en position d'ancrage, c'est-à-dire lorsque la seconde tige d'ancrage 242 coopère avec l'orifice 151a du premier organe d'ancrage de l'antivol 150 en position d'ancrage.

Ce mode de réalisation de deuxième connecteur 240 permet d'adapter une chaîne standard au système d'ancrage et de recharge selon l'invention.

Dans le même esprit, la figure 7 illustre la possibilité d'adapter un antivol de cadre 250 du commerce en lui ajoutant un premier connecteur rapporté 112 tel que celui illustré en figure 1.

Plus précisément, ce premier connecteur 112 comprend :
- une portion annulaire 114, d'épaisseur E déterminée munie d'une lumière centrale 114a, rapportée et fixée de manière non réversible contre l'orifice d'ancrage 251a du premier organe d'ancrage 251 de l'antivol 250, de manière à laisser un accès libre à l'orifice d'ancrage 251a au travers de la lumière centrale 114a ; et
- des broches de contact électrique 112a connectées à un câble d'alimentation 113 destiné à être branché sur une batterie du vélo électrique. Dans le mode de réalisation illustré, les broches 112a sont agencées radialement autour de la lumière centrale 114a de la portion annulaire 114.

Les broches sont agencées de manière à être en contact électrique avec les broches de contact du premier connecteur lorsque les deux organes d'ancrage coopèrent en position d'ancrage, c'est-à-dire lorsque la seconde tige d'ancrage 242, passée au travers de la lumière centrale traversante 114a, coopère avec l'orifice 251a du premier organe d'ancrage de l'antivol 250 en position d'ancrage. On comprend que dans ce mode de réalisation, la longueur de la seconde tige d'ancrage 242 doit être supérieure à la longueur de la première tige d'ancrage 221 de la première extrémité 220a du lien souple 220, d'une valeur égale à l'épaisseur déterminée de la portion annulaire 114 du premier connecteur.

Il est ainsi possible de commercialiser un kit 300 d'arrimage et de recharge pour un vélo électrique, le kit 300 comprenant :
- un premier connecteur 112 de la figure 7 destiné à être fixé de manière non réversible contre l'orifice d'ancrage d'un antivol de cadre ; et
- un deuxième connecteur 240 des figures 6 et 7, destiné à être fixé de manière non réversible à une première extrémité libre d'un lien souple d'arrimage du vélo à une borne fixe de recharge et d'arrimage.

La figure 8 illustre une alternative dans laquelle le lien souple d'arrimage comprend une seconde extrémité similaire à celle 220b du lien souple 220 de la figure 5, et une première extrémité similaire à celle 120a du lien souple d'arrimage 120 de la figure 1.

Les figures 9 et 10 illustrent la possibilité de concevoir un lien souple d'arrimage dont les deux extrémités sont pourvues d'un organe d'ancrage et d'un connecteur identique.

Dans la figure 9, le lien souple d'arrimage 420 de l'ensemble 400 selon l'invention comprend une première extrémité 420a similaire à celle 120a du lien souple d'arrimage 120 de la figure 1 et une seconde extrémité 420b dont la structure est identique à la première extrémité.

Ainsi, chaque extrémité 420a-420b comprend respectivement un deuxième et un troisième organe d'ancrage muni d'une tige d'ancrage 121, et comprend un connecteur 122 muni d'au moins deux broches de contact électrique 122a connectées à un câble d'alimentation 133, de telle sorte que ce dernier relie les broches de contact électrique des connecteurs des deux extrémités 420a-420b du lien souple d'arrimage 420.

De manière complémentaire, la borne de recharge et d'arrimage 430 comprend un quatrième organe d'ancrage 431 constituant un point fixe d'arrimage de la seconde extrémité libre 420b du lien souple d'arrimage 420, et qui comprend un orifice d'ancrage 431a et un mécanisme verrouillable réversiblement de blocage de la tige d'ancrage dans l'orifice d'ancrage (non illustré). En outre, la borne 430 comprend un premier moyen de liaison électrique avec un second moyen de liaison électrique porté par le câble de recharge 425 pour permettre une connexion électrique du câble de recharge à la borne de recharge lorsque le lien souple d'arrimage est fixé au premier organe d'ancrage de la borne.

À cette fin, l'organe d'ancrage 431 comprend au moins une broche de contact électrique 431b connectée à l'alimentation de la borne de recharge 430, et le câble de recharge 425 est relié aux broches de contact électrique 122a de la seconde extrémité 420b du lien souple 420. Les broches de contact électrique 431b de la borne et les broches de contact électrique 122a du connecteur de la seconde extrémité 420b du lien souple d'arrimage 420 sont agencés de manière à être en contact électrique les unes avec les autres lorsque les organes d'ancrage 121 et 431a du lien souple et de la borne sont en position d'ancrage, de sorte que la continuité électrique soit assurée entre la borne et le vélo, via le lien souple d'arrimage.

La figure 10 illustre la situation inverse de la figure 9, dans laquelle le lien souple d'arrimage 520, de l'ensemble 500 selon l'invention, porte des organes d'arrimage avec un orifice d'ancrage, alors que la borne et le vélo (par l'intermédiaire de l'antivol de cadre sur cette figure) portent des organes d'arrimage avec une tige d'ancrage.

Plus précisément, l'organe d'ancrage 521 de chaque extrémité 520a-520b du lien souple d'arrimage 520 comprend un orifice d'ancrage 522 et un mécanisme 523 verrouillable réversiblement de blocage de la tige d'ancrage 531 constituant un point fixe d'arrimage de la borne 530 et de la tige d'ancrage 511 de l'antivol dans les orifices d'ancrage 522.

Comme pour le mode de réalisation de la figure 9, la borne, le lien souple d'arrimage et l'antivol portent des broches de connexion électrique, respectivement 534, 524 et 512a pour relier électriquement le vélo à la borne lorsque le lien souple d'arrimage est fixé à la borne et au vélo. Les broches 512a sont portées par un premier connecteur 512 rapporté sur l'antivol 550. Ce connecteur peut par exemple être du type « mâle/mâle », avec une première tige d'ancrage destinée à être insérée dans un orifice d'ancrage d'un antivol de cadre standard, une portion de connexion électrique, et une seconde tige d'ancrage 511 adaptée à l'organe d'ancrage 521 de la première extrémité libre 520a du lien souple 520.

Plus précisément, le lien souple d'arrimage 520 comprend un deuxième connecteur 524, porté par la première extrémité libre 520a du lien souple d'arrimage 520, et comprenant au moins deux broches 520a de contact électrique connectées à un câble de recharge 525 destiné à être relié électriquement à la borne de recharge électrique fixe 530 lors de la connexion de la seconde extrémité libre du lien souple à la borne.

La figure 11 illustre une alternative combinant la figure 9 et la figure 10. Dans cette alternative, le lien souple d'arrimage 620, de l'ensemble 600 selon l'invention, comprend une première extrémité 620a similaire à celle 120a du lien souple 420 de la figure 9, et une seconde extrémité 620b similaire à celle 520b du lien souple 520 de la figure 10.

La figure 12 illustre un mode de réalisation d'ensemble 700 selon l'invention, dans lequel les broches de contact électrique 701a d'un premier connecteur 701 porté par un antivol 750 sont agencées de manière annulaire autour et le long d'un orifice d'ancrage 703, et les broches de contact électrique 702a d'un deuxième connecteur 702 porté la première extrémité d'un lien souple sont agencées de manière annulaire autour et le long d'une tige d'ancrage 704 complémentaire de l'orifice d'ancrage 703.

Cette structure est illustrée en figure 12 pour un premier organe d'ancrage verrouillable réversiblement, porté par le vélo (antivol de cadre), destiné à coopérer, en position d'ancrage, avec un deuxième organe d'ancrage complémentaire porté par une première extrémité libre d'un lien souple d'arrimage du vélo.

Bien entendu, cet agencement est parfaitement applicable pour des organes d'ancrage de la seconde extrémité libre du lien souple d'arrimage et de la borne, tel que dans les figures 9, 10 et 11. Il permet une connexion, quelle que soit l'orientation radiale de la tige d'ancrage par rapport à l'orifice d'ancrage.

Selon un mode de réalisation non illustré, le lien souple d'arrimage peut comprendre, en outre, entre ses deux extrémités, un câble électrique d'alarme, la borne de recharge étant conçue pour émettre une alarme si le lien souple d'arrimage est coupé. L'alarme peut être une alarme sonore, une alarme visuelle, et/ou un message d'alarme transmis par un réseau de télécommunication sur le téléphone portable du propriétaire du vélo.

Par exemple, le câble électrique d'alarme peut être un câble électrique additionnel qui n'a pour seule fonction que d'indiquer à la borne si le transfert électrique se fait correctement au sein du lien souple d'arrimage, c'est-à-dire si ce dernier est fonctionnel et intègre. Ainsi, au cas où un voleur sectionnerait le lien d'antivol (chaîne ou câble en acier), il sectionnerait également le câble électrique additionnel et la borne pourrait émettre une alarme sonore, visuelle et/ou transmettre un message d'avertissement au propriétaire du vélo.

Le système selon l'invention permet donc d'assurer non seulement l'arrimage et la recharge de n'importe quel vélo sur le domaine public, mais apporte également un service supplémentaire d'alarme dont les propriétaires de vélo ne peuvent actuellement bénéficier qu'au prix d'un important investissement individuel.

Grâce à l'invention, un propriétaire de vélo électrique peut donc, en une seule opération, arrimer son vélo à un point fixe (la borne) et le recharger.

Le système selon l'invention est polyvalent, car il peut être adapté à un très grand nombre de vélos et de matériels existants. Seules les bornes sont à installer, mais leur encombrement est faible et leur installation nécessite beaucoup moins de travaux que les stations existantes, de sorte que le système selon l'invention est non seulement très économique pour les municipalités, mais en plus elle leur permet d'installer des bornes dans des endroits peu étendus.

Le système selon l'invention permet de transformer réversiblement en vélos de flotte de location automatique des vélos « grand public », c'est-à-dire non spécifiquement conçus pour cela. Il est ainsi possible d'arrimer et recharger des vélos pourvus d'antivol de cadre communicants avec un système selon l'invention comprenant une borne de recharge (telle qu'une armoire sécurisée de recharge pour brancher et loger de manière sécurisée le chargeur d'origine du vélo), un lien souple d'arrimage à la borne incorporant un câble de recharge de branchement au chargeur, un connecteur de l'extrémité libre du lien souple relié électriquement au câble de recharge, et soit un connecteur à fixer sur un antivol de cadre communicant standard et à la batterie du vélo, soit un connecteur déjà intégré dans un antivol de cadre communicant et connecté à la batterie du vélo.

Grâce au système selon l'invention et à l'utilisation de l'antivol de cadre des vélos (équipé ou modifié), il est donc très facile et peu coûteux de constituer une flotte de vélos électriques de location à partir de vélos du commerce, tout en permettant un reconditionnement aisé des vélos pour leur vente en occasion.

## Revendications

1. Ensemble (100-200-300-400-500-600-700) d'arrimage et de recharge d'un vélo électrique (V) **caractérisé en ce qu'**il comprend un premier organe d'ancrage (111, 111a, 114a,151, 511, 704) verrouillable réversiblement, porté par un antivol de cadre (150, 250, 750) de vélo, le premier organe d'ancrage étant destiné à coopérer, en position d'ancrage, avec un deuxième organe d'ancrage complémentaire (121, 221, 242, 251a, 522, 703) porté par une première extrémité libre (120a, 220a, 520a) d'un lien souple d'arrimage (120, 220, 420, 520, 620) du vélo à une borne de chargement (130, 230, 430, 530) munie d'au moins un point fixe d'arrimage (131, 231, 331, 431, 531), l'ensemble d'arrimage et de recharge comprenant :
• un premier connecteur (112, 162, 512, 701), porté par l'antivol de cadre (150, 250, 750) de vélo, comprenant au moins deux broches de contact électrique (112a, 162a, 514, 701a) connectées à un câble d'alimentation (113, 162c) relié électriquement à une batterie du vélo électrique ; et
• un deuxième connecteur (122, 240, 524, 702), porté par la première extrémité libre (120a, 220a, 520a) du lien souple d'arrimage, et comprenant au moins deux broches (122a, 243, 524a, 702a) de contact électrique connectées à un câble de recharge (123, 223, 525) relié électriquement à la borne de recharge électrique fixe (130, 230, 530) ;
les broches de contact électrique (112a, 162a, 514, 701a, 122a, 243, 524a, 702a) des premier et deuxième connecteurs étant agencés de manière à être en contact électrique les unes avec les autres lorsque les premier et deuxième organes d'ancrage (111, 111a, 111b, 111c, 114a,151, 511, 704, 121, 221, 242, 251a, 522, 703) sont en position d'ancrage.

2. Ensemble d'arrimage et de recharge d'un vélo électrique selon la revendication 1, dans lequel le lien souple d'arrimage (120) comprend une seconde extrémité (120b) fixée de manière non réversible à la borne de recharge (130), et dans lequel le câble de recharge (123) est relié directement à la borne de recharge électrique fixe.

3. Ensemble d'arrimage et de recharge d'un vélo électrique selon la revendication 1, dans lequel le lien souple d'arrimage (220, 420, 520, 620) comprend une seconde extrémité libre (220b, 420b, 520b, 620b) munie d'un troisième organe d'ancrage (224, 121, 522), et la borne de recharge comprend un quatrième organe d'ancrage (231, 431, 531) apte à coopérer avec le troisième organe d'ancrage (224, 121, 522) pour fixer le lien souple d'arrimage (220, 420, 520, 620) à la borne de recharge de manière réversible, et un premier moyen de liaison électrique (233, 431b, 534) avec un second moyen de liaison électrique (223a, 122a, 524) porté par le câble de recharge (123, 223, 425, 525) pour permettre une connexion électrique du câble de recharge à la borne de recharge lorsque le lien souple d'arrimage est fixé de manière réversible au quatrième organe d'ancrage de la borne.

4. Ensemble d'arrimage et de recharge d'un vélo électrique selon la revendication 3, dans lequel le quatrième organe d'ancrage de la borne de recharge comprend un premier anneau d'arrimage (231), et le troisième organe d'ancrage de la seconde extrémité libre du lien souple d'arrimage comprend un second anneau d'arrimage (224).

5. Ensemble d'arrimage et de recharge d'un vélo électrique selon la revendication 3, dans lequel le troisième organe d'ancrage de la seconde extrémité libre du lien souple d'arrimage comprend une tige d'ancrage (121), et le quatrième organe d'ancrage de la borne de recharge comprend un orifice d'ancrage (431a) et un mécanisme verrouillable réversiblement de blocage de la tige d'ancrage dans l'orifice d'ancrage.

6. Ensemble d'arrimage et de recharge d'un vélo électrique selon la revendication 3, dans lequel le quatrième organe d'ancrage de la borne de recharge comprend une tige d'ancrage (531), et le troisième organe d'ancrage de la seconde extrémité libre du lien souple d'arrimage comprend un orifice d'ancrage (522) et un mécanisme (523) verrouillable réversiblement de blocage de la tige d'ancrage dans l'orifice d'ancrage.

7. Ensemble d'arrimage et de recharge d'un vélo électrique selon la revendication 1, dans lequel le premier organe d'ancrage comprend un orifice d'ancrage (151a, 251a, 703) et le deuxième organe d'ancrage complémentaire comprend une tige d'ancrage (121, 242, 704), le premier organe d'ancrage comprenant, en outre, un mécanisme (151b) verrouillable réversiblement de blocage de la tige d'ancrage dans l'orifice d'ancrage.

8. Ensemble d'arrimage et de recharge d'un vélo électrique selon la revendication 7, dans lequel le deuxième organe d'ancrage porté par la première extrémité libre du lien souple d'arrimage comprend une première tige d'ancrage (221), le deuxième connecteur comprenant :
• un orifice d'ancrage (241) conformé pour loger et bloquer de manière non réversible la première tige d'ancrage (221) de la première extrémité du lien souple ;
• une seconde tige d'ancrage (242) destinée à coopérer avec le premier organe d'ancrage (251a) porté par le vélo ; et
• des broches de contact électrique (243) reliées au câble de recharge (223), les broches de contact du deuxième connecteur étant agencée de manière à être en contact électrique avec les broches de contact électrique (112a) du premier connecteur (112) lorsque les deux organes d'ancrage (242-251a) coopèrent en position d'ancrage.

9. Ensemble d'arrimage et de recharge d'un vélo électrique selon la revendication 7, dans lequel le premier organe d'ancrage (251) porté par l'antivol de cadre de vélo comprend un orifice d'ancrage (251a), le premier connecteur (112) comprenant :
• une portion annulaire (114) munie d'une lumière centrale (114a), rapportée et fixée de manière non réversible contre l'orifice d'ancrage (251a) du premier organe d'ancrage de manière à laisser un accès libre à l'orifice d'ancrage (251a) au travers de la lumière centrale (114a) ; et
• des broches de contact électrique (112a) connectées à un câble d'alimentation (113) destiné à être branché sur une batterie du vélo électrique, les broches de contact électrique (112a) étant agencées de manière à être en contact électrique avec les broches de contact électrique (122a, 243) du deuxième connecteur (122, 240) lorsque les deux organes d'ancrage coopèrent en position d'ancrage.

10. Ensemble d'arrimage et de recharge d'un vélo électrique selon la revendication 7, dans lequel le premier organe d'ancrage (151) porté par l'antivol de cadre du vélo comprend un orifice d'ancrage (151a), le premier connecteur (162) étant intégré au premier organe d'ancrage (151) et comprenant des broches de contact électrique (162a) connectées à un câble d'alimentation (162c) destiné à être branché sur une batterie du vélo électrique, les broches de contact électrique (162a) étant agencées radialement autour de l'orifice d'ancrage (151a) du premier organe d'ancrage (151).

11. Kit (300) d'arrimage et de recharge destiné à équiper un vélo électrique ayant un premier orifice d'ancrage (251a), **caractérisé en ce qu'**il comprend :
- un premier connecteur (112) destiné à être fixé contre le premier orifice d'ancrage (251a) et comprenant :
• une portion annulaire (114) d'épaisseur déterminée (E) et munie d'une lumière centrale (114a), destinée à être rapportée et fixée de manière non réversible contre le premier orifice d'ancrage (251a) du vélo de manière à laisser un accès libre au premier orifice d'ancrage (251a) au travers de la lumière centrale (114a) ; et
• des broches de contact électrique (112a) connectées à un câble d'alimentation (113) destiné à être branché sur une batterie du vélo électrique,
- un deuxième connecteur (240) destiné à être fixé de manière non réversible à une première extrémité libre (220a) d'un lien souple (220) d'arrimage du vélo à une borne fixe de recharge, ladite première extrémité libre (220a) du lien souple (220) comprenant une première tige d'ancrage (221), le second connecteur (240) comprenant :
• un deuxième orifice d'ancrage (241) conformé pour loger et bloquer de manière non réversible la première tige d'ancrage (221) de la première extrémité du lien souple ;
• une seconde tige d'ancrage (242) destinée à coopérer avec le premier orifice d'ancrage (251a) du vélo au travers de la lumière centrale (114a) du premier connecteur ; et
• des broches de contact électrique (243) reliées à un câble de recharge (223) destiné à être connecté électriquement à la borne fixe de recharge, les broches de contact électrique (243) du deuxième connecteur (240) étant agencées de manière à être en contact électrique avec les broches de contact électrique (112a) du premier connecteur (112) lorsque la seconde tige d'ancrage (242) est fixée dans le premier orifice d'ancrage (251a) en position d'ancrage.

12. Kit d'arrimage et de recharge pour un vélo électrique muni d'un antivol de cadre ayant un premier orifice d'ancrage, **caractérisé en ce qu'**il comprend :
- un premier connecteur destiné à être fixé contre l'orifice d'ancrage et comprenant :
• une portion annulaire d'épaisseur déterminée et munie d'une lumière centrale, destinée à être fixée de manière non réversible contre le premier orifice d'ancrage de l'antivol de cadre de manière à laisser un accès libre au premier orifice d'ancrage au travers de la lumière centrale ; et
• des broches de contact électrique connectées à un câble d'alimentation destiné à être branché sur une batterie du vélo électrique, les broches étant agencées radialement autour de la lumière centrale de la portion annulaire
- un deuxième connecteur destiné à être fixé de manière non réversible à une première extrémité libre d'un lien souple d'arrimage du vélo à une borne fixe de recharge et d'arrimage, ladite première extrémité libre du lien souple comprenant une première tige d'ancrage, le second connecteur comprenant :
• un deuxième orifice d'ancrage conformé pour loger et bloquer de manière non réversible la première tige d'ancrage de la première extrémité du lien souple ;
• une seconde tige d'ancrage destinée à coopérer avec le premier orifice d'ancrage de l'antivol de cadre au travers de la lumière centrale du premier connecteur ; et
• des broches de contact électrique reliées à un câble de recharge destiné à être connecté électriquement à la borne fixe de recharge, les broches de contact du deuxième connecteur étant agencées de manière à être en contact électrique avec les broches de contact du premier connecteur lorsque la seconde tige d'ancrage est fixée dans le premier orifice d'ancrage de l'antivol en position d'ancrage.

13. Antivol de cadre comprenant un corps en U destiné à être fixé au cadre d'un vélo électrique et comprenant une serrure pour une clé et/ou un moyen de commande sans-fil électronique, et une tige de verrouillage mobile entre une position de roulage dans laquelle elle est escamotée dans le corps, et une position de blocage dans laquelle elle passe au travers d'une roue du vélo, le corps comprenant, en outre, un orifice d'arrimage verrouillable destiné à recevoir une tige d'ancrage complémentaire porté par un lien souple d'arrimage à un point fixe, l'antivol de cadre étant **caractérisé en ce que** l'orifice de connexion comprend des broches de contact électrique reliées à un câble de recharge destiné à être branché sur une batterie du vélo électrique.

14. Lien souple d'arrimage pour un vélo électrique, **caractérisé en ce qu'**il comprend :
- un câble de recharge électrique ;
- une première extrémité libre munie :
• d'un deuxième organe d'ancrage destiné à se fixer réversiblement à un premier organe d'ancrage d'un antivol de cadre de vélo ; et
• d'un deuxième connecteur destiné à être en contact électrique avec un premier connecteur porté par l'antivol de cadre de vélo, le deuxième connecteur comprenant au moins deux broches de contact électrique connectées à une première extrémité du câble de recharge électrique
- une seconde extrémité libre munie :
• d'un troisième organe d'ancrage destiné à se fixer réversiblement à un quatrième organe d'ancrage porté par une borne de recharge ;
• d'un second moyen de liaison électrique, connecté au câble de recharge, avec un premier moyen de liaison électrique porté par la borne de recharge pour permettre une connexion électrique du câble de recharge à la borne de recharge lorsque le lien souple d'arrimage est fixé de manière réversible au quatrième organe d'ancrage porté par la borne de recharge.

15. Lien souple d'arrimage pour un vélo électrique selon la revendication 14, comprenant, en outre, un manchon extérieur de protection (124) recouvrant le câble de recharge (123, 223, 525) et le lien souple d'arrimage.
